# EUROPÄISCHE PATENTANMELDUNG

(11) **EP 0 919 524 A1**
(43) Veröffentlichungstag der Anmeldung: **02.06.1999**
(21) Anmeldenummer: 98120801.0
(22) Anmeldetag: 03.11.1998
(51) Int. Cl.: C02F 3/20, F16K 24/04, F16K 24/06, B01F 15/00, B01F 3/04

(54) **Sicherheitsventil für Belüftungseinrichtungen**

(30) Priorität: 27.11.1997 DE 19752529
(71) Anmelder: SCHMIDT-HOLTHAUSEN, Stephan, 74321 Bietigheim-Bissingen (DE)
(72) Erfinder: SCHMIDT-HOLTHAUSEN, Stephan, 74321 Bietigheim-Bissingen (DE)
(74) Vertreter: Kastner, Hermann, Dipl.-Ing. Patentanwalt

(57) **Zusammenfassung**

Die Schutzeinrichtung (70) ist für Belüftungseinrichtungen insbesondere in Form von Membranbelüftern (74) bestimmt, die an eine Luftversorgungsleitung (14) mit einer Druckluftquelle angeschlossen sind. In die Luftversorgungsleitung (14) zwischen dem Membranbelüfter (74) und der Druckluftquelle ist ein Rückschlagventil (71) eingeschaltet, das sich beim Ausfall der Druckluftversorgung selbsttätig schließt. Zwischen der Druckluftquelle und dem Rückschlagventil (71) ist ein Absperrventil (72) eingeschaltet, das offen ist, wenn die Strömungsgeschwindigkeit dem Nennbetrieb der Belüftungseinrichtung entspricht, und das beim Ansteigen der Strömungsgeschwindigkeit über einen vorgegebenen Differenzwert zum Nennbetrieb selbsttätig schließt und geschlossen bleibt, solange an seinem Ventilkörper ein positives Druckgefälle in Richtung zum Rückschlagventil (71) hin herrscht.

## Beschreibung

In biologischen Klärstufen Von Kläranlagen wird sehr häufig das sogenannte Belebungsverfahren angewendet. Dabei wird in Becken mit langgestrecktem rechteckigem Grundriß mit einer Wassertiefe von 4 bis 8 m eine Vielfalt von Kleinlebewesen angesiedelt, die die im Wasser enthaltenen organischen Verschmutzungen in ihren Stoffwechsel aufnehmen und sie auf ihre Grundstoffe abbauen. Diese Kleinlebewesen benötigen dazu ausreichend Sauerstoff, den sie in gelöster Form dem Abwasser entnehmen. Dafür wird des Abwasser in der Regel durch eine am Boden des Beckens angeordnete Belüftungseinrichtung ständig belüftet, d.h. durch die Belüftungseinrichtung wird Luft, manchmall auch reiner Sauerstoff, fein verteilt in das Abwasser eingeleitet. Die Luftbläschen steigen schleierartig in dem Wasser auf, wobei ein Teil ihres Sauerstoffgehaltes an der Grenzfläche der Luftbläschen in das sie umgebende Wasser übertritt und darin gelöst wird. Dieser gelöste Sauerstoff steht den Kleinlebewesen für die Atmung zur Verfügung. Derjenige Sauerstoffinhalt der Luftbläschen, der auf dem Weg von den Belüftungseinrichtungen bis zur Wasseroberfläche nicht in die Flüssigkeit übergetreten ist, entweicht an der Wasseroberfläche zusammen mit dem übrigen Gasgehalt der Luftbläschen in die Athmophäre. Es kommt also darauf an, diese Luft durch die Belüftungseinrichtungen möglichst feinblasig in dem Abwasser zu verteilen. Dazu werden sehr häufig Membranbelüfter eingesetzt.

Bei einer Belüftungseinrichtung mit Membranbelüftern sind in dem zu belüftenden Becken Verteilerleitungen aus Edelstahloder Kunststoffrohren verlegt. An diese Verteilerleitungen werden Membranbelüfter angeschlossen, die von Fall zu Fall unterschiedliche Bauform und Größe haben können und aus verschiedenen Werkstoffen hergestellt sein können. Ihnen ist gemeinsam, daß die dem Abwasser zugekehrte Oberseite ihrer Belüfterkörper von einer Gummimembran bedeckt ist, die entlang ihrem Rand wasser- und luftdicht mit dem Belüfterkörper verbunden ist. Diese Gummimembranen haben in einem bestimmten Verteilungsmuster Löcher in einer bestimmten Größe, die die gewünschte Bläschengröße erzeugen. Dazu wird die Luft durch den Belüfterkörper an die Unterseite der Gummimembran hingeleitet. Durch den Überdruck der Luft gegenüber dem Druck der auf der Außenseite lastenden Abwasserschicht wird die Membran etwas angehoben und dabei etwas gedehnt, so daß die Luft durch die Löcher der Gummimembran hindurchtreten kann, wonach sie als feine Luftbläschen durch das Abwasser emporsteigen. Wenn unterhalb der Membran der Luftdruck auf den Druck der auf der Membran lastenden Wasserschicht oder noch darunter absinkt, zieht die Gummimembran sich wieder zusammen und legt sich an der Oberseite des Belüfterkorpers dicht an. Dadurch werden die feinen Löcher der Gummimembran nach unten abgeschlossen, so daß das Abwasser nicht unter die Membran und in den Belüfterkörper und in die daran anschließenden Versorgungsleitungen eindringen kann. Das würde zur Verschmutzung dieser Teile führen und im Laufe der Zeit auch Ablagerungen, wenn nicht gar Verstopfungen, zur Folge haben.

Wenn die Gummimembran, aus welchen Gründen auch immer, verletzt wird und Risse bekommt, verliert sie ihre Eigenschaft, die Belüfterkörper und vor allem die daran angeschlossene tiefer gelegene Versorgungsleitung gegen das Eindringen des Abwassers zu schützen. Des Auftreten von Rissen in der Gummimembran hat aber auch noch einen weiteren großen Nachteil. Die Gummimembran hat aufgrund der Verteilung und der Größe ihrer Löcher einen bestimmten Strömungswiderstand für die zugeführte Luft. Da in einem Belüftungsbecken die vorhandenen Membranbelüfter nach Möglichkeit so ausgebildet sind, daß bei allen dieser Strömungswiderstand zumindest annähernd gleich groß ist, werden alle gleichmäßig mit Luft versorgt und ist bei allen der Luftaustritt zumindest annähernd gleich. Bei einer eingerissenen oder gar aufgerissenen Membran ist dieser Strömungswiderstand erheblich geringer als bei den unbeschädigten Membranen. Die Folge ist, daß bei der beschädigten Gummimembran die Luft in einem starken Blasenschwall austritt und wegen des dadurch auftretenden Druckverlustes bei den intakten Membranbelüftern der Luftaustritt mehr oder minder stark verringert ist. Bei den Membranbelüftern mit beschädigter Membran steigt die Luft in großen Blasen schnell empor, wodurch die Lösungsrate für den Luftsauerstoff sehr stark vermindert ist. Bei den Membranbelüftern mit intakter Membran ist der Sauerstoffeintrag deswegen verringert, weil bei ihnen weniger Luft austritt.

Der Erfindung liegt die Aufgabe zugrunde, eine Schutzeinrichtung für Belüftungseinrichtungen zu schaffen, mittels der bei Belüftungseinrichtungen mit Membranbelüftern bei der Beschädigung einer Membran sowohl das Eindringen von Abwasser in die Luftversorgungsleitung wie auch das übermäßige Ausströmen von Luft in das Abwasser verhindert werden kann. Diese Aufgabe wird durch eine Schutzeinrichtung mit den im Anspruch 1 angegebenen Merkmalen gelöst.

Dadurch, daß in der Luftversorgungsleitung von der Druckluftquelle aus betrachtet vor der Membran ein Rückschlagventil eingeschaltet ist, wird verhindert, daß bei beschädigter Membran beim Abschalten der Luftversorgung oder auch nur beim Absinken des Druckes der Versorgungsluft unter den Druck der Wasserschicht über der Membran Abwasser in die Versorgungsleitung eindringen kann und diese verschmutzen oder gar verstopfen kann. Dadurch, daß in der Versorgungsleitung zwischen dem Rückschlagventil und der Druckluftquelle ein Absperrventil eingeschaltet ist, das beim Ansteigen der Strömungsgeschwindigkeit in der Versorgungsleitung über einen vorgegebenen Differenzwert zur Strömungsgeschwindigkeit beim Nennbetrieb hinaus selbsttätig schließt, wird verhindert, daß bei beschädigter Membran die die Luft im Übermaß austreten kann. Das Absperrventil schaltet diesen Membranbelüfter sogar vollständig ab.

Da bei einer Belüftungseinrichtung in der Regel mehrere bis sehr viele Membranbelüfter vorhanden sind, die parallel zueinander über ihre Versorgungsleitungen mit der gleichen Druckluftquelle verbunden sind, wird durch das selbsttätig schließende Absperrventil verhindert, daß bei der Beschädigung der Membran eines der Membranbelüfter dort infolge des ungehinderten Luftaustrittes ein größerer Druckabfall in der Versorgungsleitung ausgelöst wird und dadurch die übrigen Membranbelüfter mit unbeschädigter Membran nur noch unzulänglich mit Druckluft versorgt werden. Durch dieses selbst-tätige Abschalten eines Membranbelüfters mit beschädigter Membran kann die gesamte Belüftungseinrichtung zunächst einmal weiter betrieben werden, bis sich aus anderen Gründen die Gelegenheit oder Notwendigkeit ergibt, das Belüftungsbecken zu entleeren, wonach dann alle beschädigten Membranen ausgewechselt werden können. Das muß also nicht bei jedem einzelnen Membranschaden gemacht werden, was sonst erforderlich wäre.

Durch eine Ausgestaltung nach Anspruch 2 oder Anspruch 3 werden Rückschlagventile geschaffen, die je nach der Bauart der Membranbelüfter alternativ eingesetzt werden können.

Mit einer Ausgestaltung nach Anspruch 4 wird ein Absperrventil geschaffen, bei dem einerseits der Ventilkörper bei Nennbetrieb der Belüftongseinrichtung in einer bestimmten mittleren Höhenstellung im Bereich des unteren Flächenabschnittes der Innenfläche des Ventilgehäuses schwebt und er auch bei Änderungen der Strömungsgeschwindigkeit innerhalb gewisser Grenzen in einer entsprechend veränderten Höhenstellung in der Schwebe bleibt und bei dem andererseits bei einer stärkeren Zunahme der Strömungsgeschwindigkeit, wie sie bei einer Beschädigung der Membran eines Membranbelüfters auftritt, der Ventilkörper zu dem oberhalb gelegenen Ventilsitz hin angehoben wird und sich daran anlegt und damit ein weiteres Durchströmen der Versorgungsluft verhindert. So lange unterhalb des Ventilkörpers ein statischer Druck fortbesteht, der größer als der Druck oberhalb des Ventilsitzes ist, bleibt der Ventilkörper in seiner Schließstellung. Wenn die Druckluftversorgung abgeschaltet wird, fällt der Ventilkörper vom Ventilsitz ab.

Bei einer Weiterbildung nach Anspruch 5 wird das Abstimmen des Absperrventils auf unterschiedliche Membranbelüfter oder auf veränderte Anforderungen an die Strömungsgeschwindigkeit und den Mengenstrom der Versorgungsluft erheblich erleichtert, weil der dafür wichtige Abschnitt der Innenfläche des Ventilgehäuses an einem gesonderten Teil, nämlich dem Einsatz, angeordnet ist und daher nur der Einsatz gegen einen anders abgestimmten Einsatz ausgetauscht werden muß, ohne daß die übrigen Teile des Absperrventils verändert werden müssen oder ebenfalls ausgetauscht werden müssen.

Bei einer Weiterbildung nach Anspruch 6 wird bei einer Annäherung des Ventilkörpers an den Ventilsitz ab einer bestimmten Höhenstellung des Ventilkörpers der Durchlaßquerschnitt des Ringspaltes zwischen dem Ventilkörper und dem Ventilsitz kleiner als derjenige das weiter unten gelegenen Ringspaltes zwischen dem Ventilkörper und der Innenwand des Ventilgehäuses. Dadurch steigt im oberen Ringspalt die Strömungsgeschwindigkeit und damit der dynamische Druck an, während gleichzeitig der statische Druck im oberen Bereich des Ventilkörpers abnimmt und in jedem Falle unter den statischen Druck im unteren Bereich des Ventilkörpers absinkt. Dadurch wird der Ventilkörper beim Erreichen der Grenzstellung an den Ventilsitz herangesaugt und schließlich an ihm angedrückt. Das gilt in noch stärkerem Maße für eine Weiterbildung nach Anspruch 7, bei der im oberen Ringspalt die Beschleunigungsstrecke für die Luft verlängert ist und dementsprechend die Fläche mit dem geringeren statischen Druck vergrößert ist.

Mit einer Ausgestaltung nach Anspruch 8 wird eine genau definierte Ruhestellung für den Ventilkörper erreicht. Mit einer Weiterbildung nach Anspruch 9 wird erreicht, daß im Bereich des unteren Flächenabschnittes der Innenfläche des Ventilgehäuses die Luft in dem Ringspalt zwischen dem Ventilkörper und der Innenfläche einen Drall bekommt, der sich aufgrund der Reibungskräfte zwischen der Luft und dem Ventilkörper auch auf diesen übarträgt und ihn um die Hochachse in Rotation versetzt und ihn dadurch in seiner Schwebestellung stabilisiert.

Im folgenden wild die Erfindung anhand zweier in der Zeichnung dargestellter Ausführungsbeispiele näher erläutert. Es zeigen:
- Fig. 1: einen Vertikalschnitt eines ersten Ausführungsbeispieles der Schutzvorrichtung;
- Fig. 2 und 3: eine Draufsicht bzw. einen Vertikalschnitt einer Stützvorrichtung der Schutzvorrichtung;
- Fig. 4: einen Vertikalschnitt eines abgewandelten Ventilgehäuses für die Schutzvorrichtung;
- Fig. 5: einen ausschnittweise dargestellten Vertikalschnitt eines Membranbelüfters mit einem zweiten Ausführungsbeispiel der Schutzvorrichtung.

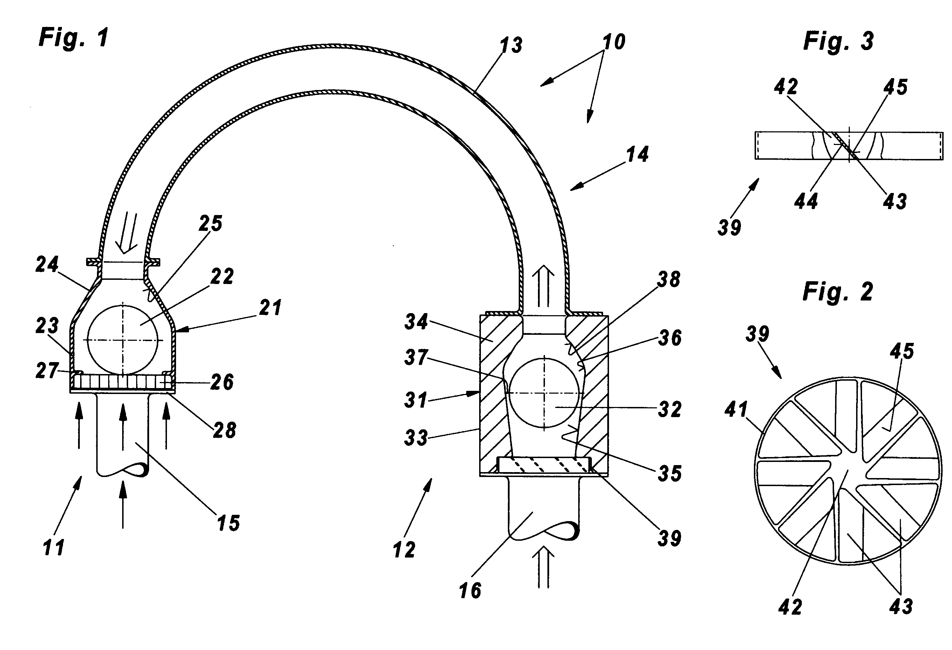

Die aus Fig. 1 ersichtliche Schutzvorrichtung 10 für einen im übrigen nicht dargestellten Membranbelüfter einer Belüftungseinrichtung ist weitgehend schematisch dargestellt. Luftströme sind durch Hohlpfeile und Wasserströme durch Vollpfeile angedeutet.

Die Schutzvorrichtung 10 weist ein Rückschlagventil 11 und ein Absperrventil 12 auf. Diese beiden Ventile sind über einen Rohrbogen 13 miteinander verbunden, der jeweils am oberen Ende des Rückschlagventils 11 und des Absperrventils 12 angeschlossen ist. Dieser Rohrbogen 13 bildet einen Teil einer Luftversorgungsleitung 14 für den Membranbelüfter. Dieer ist über einen Leitungsabschnitt 15 mit dem unteren Ende des Rückschlagventils 11 verbunden. Am unteren Ende des Absperrventils 12 ist ein weiterer Leitungsabschnitt 16 angeschlossen, über den die Schutzvorrichtung 10 und damit auch der Membranbelüfter mit einer Druckluftquelle in Verbindung steht.

Das Rückschlagventil 11 ist als Schwimmerventil ausgebildet. Es weist ein Ventilgehäuse 21 auf, in dem ein Schwimmerkörper 22 untergebracht ist. Der Schwimmerkörper 22 ist als Kugel ausgebildet, die leichter als die zu belüftende Flüssigkeit im Belebungsbecken ist.

Das Ventilgehäuse weist einen unteren Gehäuseabschnitt 23 auf, der zumindest näherungsweise als hohler Kreisringzylinder ausgebildet ist. Die lichte Weite des unteren Gehäuseabschnitts 23 ist größer als der Außendurchmesser des Schwimmerkörpers 22. Der Rinspalt zwischen dem Schwimmerkörper 22 und dem unteren Gehäuseabscnitt 23 ist so groß bemessen, daß die dem Membranbelüfter zuzuleitende Luft ohne nennenswerten Druckabfall durch das Rückschlagventil 21 hindurchströmen kann. Der an den unteren Gehäuseabschnitt 23 anschließende obere Gehäusabschnitt 24 verengt sich bis auf den Durchmesser des Rohrbogens 13. Die engste Stelle des oberen Gehäuseabschnitts 24 hat eine lichte Weite, die kleiner als der Außendurchmesser des Schwimmerkörpers 22 ist. Derjenige Teil des oberen Gehäuseabschnitts 24, dessen lichte Weite kleines als der Durchmesser des Schwimmerkörpers 22 ist, bildet einen Ventilsitz 25 für den Schwimmerkörper 22. Im Bereich dieses Ventilsitzes 25 kann die Innenfläche des oberen Gehäuseabschnitts 24 als Kegelstumpfmantelfläche ausgebildet sein. Sie kann aber auch als Negativbild des Teils der Außenform des Schwimmerkörpers 22 ausgebildet sein, in dessen Bewagungsbahn sie gelegen ist, wenn der Schwimmerkörper 22 eine vertikale Aufwärtsbewegung macht.

Am unteren Ende des unteren Gehäuseteils 23 ist eine Stützvorrichtung 26 angeordnet, die den Schwimmerkörper 22 in seiner in Fig. 1 dargestellten Ruhestellung aufnimmt. Die Stützvorrichtung 26 ist für die im Leitungsabschnitt 25 aufsteigende Flüssigkeit aus dem Belebungsbecken durchlässig. Die Stützvorrichtung 26 ist entweder als Scheibe mit zahlreichen Durchgangslöchern oder als Parallelgitter oder als Kreuz- oder Netzgitter ausgebildet. Sie wird von unten her in einen kreisförmigen Sitz 27 eingesetzt und von dem Flansch 28 des Leitungsabschnittes 15 gehalten.

Das Absperrventil 12 weist ein Ventilgehäuse 31 auf, in dem ein Ventilkörper 32 untergebracht ist. Der Ventilkörper 32 ist zumindest in Bezug auf eine vertikale Achse als Rotationskörper ausgebildet. Im einfachsten Falle hat er Kugelform wie in Fig. 1 dargestellt ist.

Am Ventilgehäuse 31 kann man wiederum zwei Gehäuseabschnitte nach ihrem Aufbau und ihrer Wirkungsweise voneinander unterscheiden. Der untere Gehäuseabschnitt 33 hat eine lichte Weite, die größer als der Außendurchmesser des Ventilkörpers 32 ist. Der an den unteren Gehäuseabschnitt 33 anschließende obere Gehäuseabschnitt 34 verengt sich auf eine lichte Weite, die kleiner als der Außendurchmesser des Ventilkörpers 32 ist. Die Innenfläche des gesamten Ventilgehäuses 31 entspricht zumindest annähernd der Negativform eines in Bezug auf eine vertikale Achse als Rotationskörper ausgebildeten Körpers.

Entsprechend der gedanklichen oder tatsächlichen Aufteilung des Ventilgehäuses 31 in einen unteren Gehäuseabschnitt 33 und einen oberen Gehäuseabschnitt 34 kann man sich auch die Innenfläche des Ventilgehäuses 31 in zwei Flächenabschnitte unterteilt vorstellen, nämlich in den unteren Flächenabschnitt 35 und den oberen Flächenabschnitt 36.

Der untere Flächenabschnitt 35 hat über seine gesamte Höhe eine lichte Weite, die größer als der größte Durchmesser des Ventilkörpers 32 ist. Sie nimmt von unten nach oben in der Weise stetig zu, daß in einem mittleren Höhenbereich des unteren Flächenabschnittes 35 der Ringspalt 37 zwischen der Innenfläche 35 des Gehäuseabschnittes 33 und dem Ventilkörper 32 zumindest annähernd auf diejenige Strömungsgeschwindigkeit der Versorgungsluft abgestimmt ist, die bei Nennbetrieb der Belüftungseinrichtung auftritt. Der untere Flächenabschnitt 35 ist im einfachsten Falle zumindest zum Teil als Kegelstumpfmantelfläche ausgebildet.

Der obere Flächenabschnitt 36 hat in seinem an den unteren Flächenabschnitt 35 anschließenden unteren Teil eine lichte Weite, die größer als der Außendurchmesser des Ventilkörpers 32 ist. Der obere Flächenabschnitt 36 hat in seinem oberen Teil eine lichte Weite, die kleiner als der größte Durchmesser des Ventilkörper 32 ist. Dadurch bildet derjenige Teil des oberen Flächenabschnittes 36 der in die Bewegungsbahn des vertikal aufwärts bewegten Ventilkörpers 32 hineinragt, einen Ventilsitz 38 für den Ventilkörper 32. Dieser Ventilsitz 38 kann als Kegelstumpfmantelfläche ausgebildet sein. Zweckmäßiger ist es, daß der Ventilsitz 38 durch eine Fläche gebildet wird, die zumindest annähernd als Negativform des mit ihr zusammenwirkenden Teils der Oberfläche des Ventilkörpers 32 ausgebildet ist. Bei einem kugelförmigen Ventilkörper 32 wird der Ventilsitz durch einen Abschnitt einer Hohlkugelfläche gebildet.

Am unteren Ende des unteren Gehäuseabschnittes 33 ist eine Stützvorrichtung 39 für den Ventilkörper 32 angeordnet. Sie muß für die Versorgungsluft des betreffenden Membranbelüfters ausreichend durchlässig sein. Die Stützvorrichtung 39 kann durch eine mehrfach gelochte Scheibe oder durch ein Parallelgitter oder ein Kreuz- oder Netzgitter gebildet werden. Zweckmäßiger ist es, die Stützvorrichtung 39 nach Art eines Speichenrades auszubilden, wie es in Fig. 2 und Fig. 3 dargestellt ist. Die Stützvorrichtung 39 weist einen kreisringzylinderförmigen Außenkranz 41 und innen einen Nabenkörper 42 auf. Der Nabenkörper 42 ist zweckmäßigerweise wie eine Propellernabe ausgebildet. Zwischen dem Außenkranz 41 und dem Nabenkörper 42 erstrecken sich eine Anzahl zumindest annähernd radial ausgerichteter Speichen 43. Diese Speichen 43 sind zweckmäßigerweise zumindest näherungsweise leistenförmig ausgebildet, wobei ihre Seitenflächen 44 und 45 in Bezug auf eine durch die Achse der Stützvorrichtung 39 hindurchgehenden Ebene untereinander im gleichen Drehsinn schräg gestellt sind. Die Seitenflächen 44 und 45 sind zueinander parallel ausgerichtet. Sie können aber auch wie die Oberseite und Unterseite von Leitschaufeln ausgebildet sein. Durch die Schrägstellung der Speichen 43 erhält der hindurchtretende Luftstrom einen Drall, der sich infolge der Oberflächenreibung auch auf den Ventilkörper 32 überträgt, so daß dieser um eine vertikal ausgerichtete Achse rotiert und dadurch im Luftstrom stabilisiert ist.

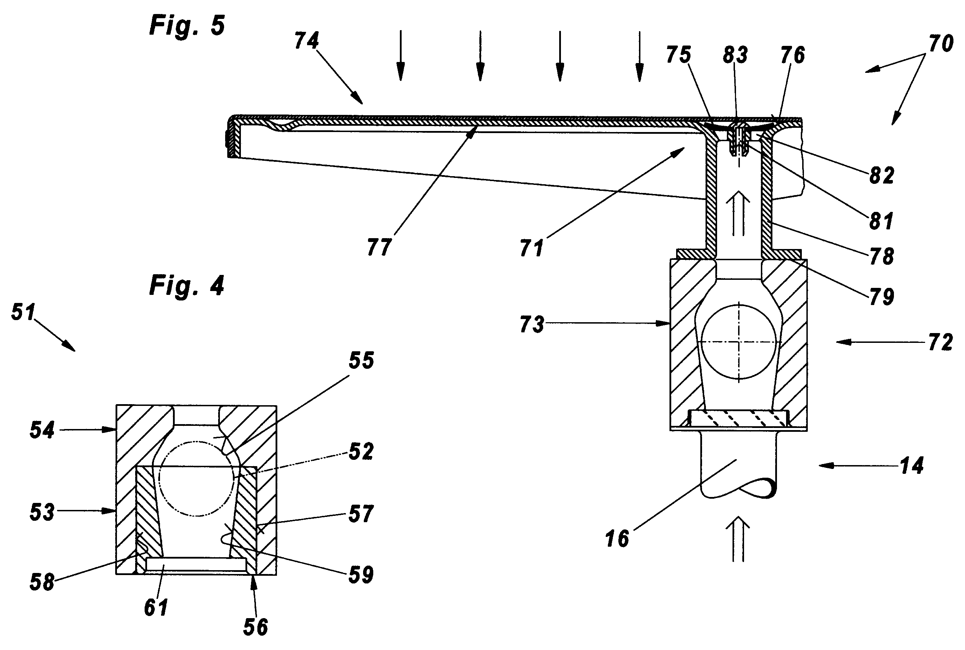

Aus Fig. 4 ist ein abgewandeltes Ventilgehäuse 51 für das Absperrventil 12 zu ersehen. Darin ist der mit einer Strichpunktlinie angedeutete Ventilkörper 52 untergebracht, der gleich dem Ventilkörper 32 ausgebildet ist.

Beim Ventilgehäuse 51 ist der obere Gehäuseabschnitt 54 gleich dem oberen Gehäuseabschnitt 34 des Ventilgehäuses 31 ausgebildet. Er weist den Ventilsitz 55 auf, der auf die Außenform des Ventilkörpers 52 abgestimmt ist. Der untere Gehäuseteil 53 ist gegenüber dem Gehäuseteil 33 des Ventilsitzes 31 dahingehend abgewandelt, daß darin ein hohler Einsatz 56 angeordnet ist. Dieser Einsatz 56 hat eine kreiszylindrische Außenfläche 57, die auf eine ebenfalls kreiszylindrische Innenfläche 58 des Gehäuseabschnittes 53 abgestimmt ist. Die dem unteren Flächenabschnitt 35 des Ventilgehäuses 31 entsprechende Innenfläche des Ventilgehäuses 51 wird durch die Innenfläche 59 des Einsatzes 56 gebildet.

Dadurch, daß diese für die Betriebsstellung des Ventilkörpers 52 wichtige Innenfläche 59 an einem gesonderten Teil, nämlich dem Einsatz 56, angeordnet ist, kann sie leichter auf unterschiedliche Anforderungen der Belüftungseinrichtung hinsichtlich des Luftstromes und der Strömungsgeschwindigkeit eingestellt werden, indem nur die Innenfläche des Einsatzes 56 entsprechend verändert wird, ohne daß davon die übrigen Teile des Ventilgehäuses 51 betroffen sind. Bei einer Veränderung der Strömungsverhältnisse der Versorgungsluft genügt es, den Einsatz 56 gegen einen anders abgestimmten Einsatz auszutauschen.

Am unteren Ende des Einsatzes 56 ist, wie beim Ventilgehäuse 31, eine zylindrische Ausnehmung 61 vorhanden, in die die Stützvorrichtung 39 eingesetzt wird, die den Ventilkörper 52 in seiner Ruhestellung aufnimmt.

Aus Fig. 5 ist eine abgewandelte Schutzeinrichtung 70 zu ersehen. Sie weist ein Rückschlagventil 71 und ein Absperrventil 72 auf.

Das Absperrventil 72 ist gleich dem Absperrventil 12 ausgebildet. Es weist ein Ventilgehäuse 73 auf, das entweder gleich dem Ventilgehäuse 31 (Fig. 1) oder gleich dem Ventilgehäuse 51 (Fig. 4) ausgebildet ist. Am unteren Ende des Absperrventils 72 ist wiederum der Leitungsabschnitt 16 der Luftversorgungsleitung 14 angeschlossen.

Bei der Schutzeinrichtung 70 ist das Rückschlagventil 71 in den dafür ausgebildeten Membranbelüfter 74 integriert. Das Rückschlagventil 71 ist als Membranventil ausgebildet. Es weist als Ventilkörper eine elastisch nachgiebige Ventilmembran 75 auf, die einen kreisringförmigen Grundriß hat. In der Ruhe- oder Schließstellung des Rückschlagventils 71 (Fig. 5) liegt der Randbereich der Ventilmembran 75 an einem ringförmig umlaufenden Ventilsitz 76 an, der durch die gekrümmte Übergangsfläche zwischen dem tellerförmigen Belüfterkörper 77 und dem in seiner Mitte axial daran anschließenden Anschlußstutzen 78 gebildet wird, mittels dessen Flansch 79 der Membranbelüfter 74 mit dem oberen Ende des Absperrventils 72 verbunden ist. Am oberen Ende des Anschlußstutzens 78 ist eine Haltevorrichtung 81 angeordnet, die nach Art einer Nabe ausgebildet ist und durch mehrere speichenförmige Rippen 82 mit der Wand des Anschlußstutzens 78 verbunden ist. Soweit der Belüfterkörper 77 und der Anschlußstutzen 78 als einstückiges Gußteil hergestellt werden, ist es zweckmäßig, die Haltevorrichtung 81 und ihre Halterippen 82 gleich mit anzuformen, d.h. zusammen mit den übrigen Teilen als einstückiges Gußteil herzustellen. In der Mitte der Haltevorrichtung 81 ist ein Gewindeloch angeordnet, in das eine Kopfschraube 83 eingeschraubt ist, die die Ventilmembran 75 mit der Haltevorrichtung 81 lösbar verbindet.

### Bezugszeichenliste S 97. 12. DE 1

- 10: Schutzvorrichtung
- 11: Rückschlagventil
- 12: Absperrventil
- 13: Rohrbogen
- 14: Luftversorgungsleitung
- 15: Leitungsabschnitt
- 16: Leitungsabschnitt
- 21: Ventilgehäuse
- 22: Schwimmerkörper
- 23: unterer Gehäuseabschnitt
- 24: oberer Gehäuseabschnitt
- 25: Ventilsitz
- 26: Stützvorrichtung
- 27: Sitz
- 28: Flansch
- 31: Ventilgehäuse
- 32: Ventilkörper
- 33: unterer Gehäuseabschnitt
- 34: oberer Gehäuseabschnitt
- 35: unterer Flächenabschnitt
- 36: oberer Flächenabschnitt
- 37: Ringspalt
- 38: Ventilsitz
- 39: Stützvorrichtung
- 41: Außenkranz
- 42: Nabenkörper
- 43: Speichen
- 44: Seitenfläche
- 45: Seitenfläche
- 51: Ventilgehäuse
- 52: Ventilkörper
- 53: unterer Gehäuseabschnitt
- 54: oberer Gehäuseabschnitt
- 55: Ventilsitz
- 56: Einsatz
- 57: Außenfläche
- 58: Innenfläche
- 59: Innenfläche
- 61: Ausnehmung
- 70: Schutzeinrichtung
- 71: Rückschlagventil
- 72: Absperrventil
- 73: Ventilgehäuse
- 74: Membranbelüfter
- 75: Ventilmembran
- 76: Ventilsitz
- 77: Belüfterkörper
- 78: Anschlußstutzen
- 79: Flansch
- 81: Haltevorrichtung
- 82: Rippen
- 83: Kopfschraube

## Patentansprüche

1. Schutzeinrichtung für Belüftungseinrichtungen, mit den Merkmalen:
- es ist wenigstens ein Membranbelüfter vorhanden,
- es ist eine Luftversorgungsleitung vorhanden, mittels der der Membranbelüfter an eine Druckluftquelle anschließbar ist,
- in die Luftversorgungsleitung (14) ist zwischen Membranbelüfter und Druckluftquelle ein Rückschlagventil (11) eingeschaltet, das beim Absinken des Luftdruckes in der Luftversorgungsleitung unter den Druck der zu belüftenden Flüssigkeit schließt,
- es ist ein selbsttätig wirkendes Absperrventil (12) vorhanden,
- - das in der Luftversorgungsleitung (14) zwischen der Druckluftquelle und dem Rückschlagventil (11) eingeschaltet ist,
- - das offen ist, wenn die Strömungsgeschwindigkeit in der Luftversorgungsleitung (14) zumindest annähernd dem Nennbetrieb der Belüftungseinrichtung entspricht und
- - das beim Ansteigen der Strömungsgeschwindigkeit in der Luftversorgungsleitung (14) über einen vorgegebenen Differenzwert zum Nennbetrieb hinaus schließt und geschlossen bleibt, so lange am Ventilkörper (32) ein positives Druckgefälle in Richtung zum Rückschlagventil (11) hin herrscht.

2. Schutzeinrichtung nach Anspruch 1,
mit den Merkmalen:
- das Rückschlagventil (11) ist als Schwimmerventil ausgebildet,
- - das ein Ventilgehäuse (21) aufweist,
- - das einen im Ventilgehäuse (21) geführten Schwimmerkörper (22) aufweist, der leichter als die zu belüftende Flüssigkeit ist, und
- - das am oberen Ende des Ventilgehäuses (31) einen Ventilsitz (25) für den Schwimmerkörper (22) und einen Anschluß für die vom Absperrventil (12) heranfürende Luftversorgungsleitung (13) aufweist und
- - das am unteren Ende des Ventilgehäuses (21) eine für die zu belüftende Flüssigkeit durchlässige Stützvorrichtung (26) für den Schwimmerkörper (22) aufweist.

3. Schutzeinrichtung nach Anspruch 1, mit den Merkmalen:
- das Rückschlagventil (71) ist als Membranventil ausgebildet,
- - das als Ventilkörper eine elastisch nachgiebige Ventilmembran (75) aufweist, die vorzugsweise einen kreisringförmigen Grundriß hat,
- - das einen ringförmig umlaufenden Ventilsitz (76) für den Randbereich der Ventilmembran (75) aufweist, der auf der Lufteinströmseite angeordnet ist und
- - das eine Haltevorrichtung (81) für die Ventilmembran (75) aufweist, die die Ventilmembran (75) vorzugsweise in deren Mitte festhält.

4. Schutzeinrichtung nach Anspruch 1, mit den Merkmalen:
- das Absperrventil (12) weist einen Ventilkörper (32) auf, der zumindest in Bezug auf eine vertikale Achse als Rotationskörper ausgebildet ist,
- das Absperrventil (12) weist ein Ventilgehäuse (31) auf,
- - das einerseits einen Anschluß für an die von der Druckluftquelle heranführende Luftvesorgungsleitung (16) aufweist und
- - das andererseits einen Anschluß für an die zum Rückschlagventil (11) hinführende Luftversorgungsleitung (13) aufweist,
- das Ventilgehäuse (31) hat eine innere Umfangsfläche (Innenfläche) , die zumindest annähernd der Negativform eines in Bezug auf eine vertikale Achse als Rotationskörper ausgebildeten Körpers entspricht,
- die Innenfläche hat wenigstens zwei Abschnitte (35; 36), die übereinander gelegen sind,
- der untere Flächenabschnitt (35) hat eine lichte Weite,
- - die größer als der größte Durchmesser des Ventilkörpers (32) ist und
- - die von unten nach oben in der Weise stetig zunimmt, daß in einem mittleren Höhenbereich der Ringspalt (37) zwischen der Innenfläche (35) des Ventilgehäuses (31) und dem Ventilkörper (32) zumindest annähernd auf die bei Nennbetrieb der Belüftungseinrichtung auftretende Strömungsgeschwindigkeit der Versorgungsluft abgestimmt ist,
- bevorzugt ist der untere Flächenabschnitt (35) zumindest zum Teil als Kegelstumpfmantelfläche ausgebildet,
- der obere Flächenabschnitt (36) hat zumindest zum Teil eine lichte Weite, die kleiner als der größte Durchmesser des Ventilkörpers (32) ist, wodurch dieser Teil einen Ventilsitz (38) für den Ventilkörper (32) bildet.

5. Schutzeinrichtung nach Anspruch 4, mit dem Merkmal:
- der untere Flächenabschnitt der Innenfläche des Ventilgehäuses (51) wird durch die Innenfläche (59) eines Einsatzes (56) gebildet,
- - der eine zylindrische Außenfläche (57) hat und
- - der in eine auf ihn abgestimmte Ausnehmung (58) des Ventilgehäuses (51) eingesetzt ist,

6. Schutzeinrichtung nach Anspruch 4, mit dem Merkmal:
- der Ventilsitz wird durch eine Kegelstumfmentelfläche gebildet.

7. Schutzeinrichtung nach Anspruch 4, mit dem Merkmal:
- der Ventilsitz (38) wird durch eine Fläche gebildet, die zumindest annähernd als Negativform des mit ihr zusammenwirkenden Teils der Oberfläche des Ventilkörpers (32) ausgebildet ist.

8. Schutzeinrichtung nach Anspruch 1, mit dem Merkmal:
- am unteren Ende des Ventilgehäuses (31) ist eine für die Versorgungsluft ausreichend durchlässige Stützvorrichtung (39) für den Ventilkörper (32) vorhanden.

9. Schutzeinrichtung nach Anspruch 8, mit den Merkmalen:
- die Stützvorrichtung (39) ist nach Art eines Speichenrades mit zumindest annähernd radial ausgerichteten Speichen (43) ausgebildet,
- bevorzugt weisen die Speichen (43) zueinander zumindest annähernd parallele Seitenflächen (44; 45) auf, die in Bezug auf eine durch die Achse hindurchgehende Ebene im gleichen Drehsinn schräg eingestellt sind.
